# FASCICULE DE BREVET EUROPEEN

(11) **EP 2 577 834 B1**
(45) Date de publication et mention de la délivrance du brevet: **13.08.2014**
(21) Numéro de dépôt: 11728345.7
(22) Date de dépôt: 01.06.2011
(51) Int. Cl.: H02J 3/38, G05F 1/67

(54) **DISPOSITIF DE CONNEXION MATRICIELLE POUR PANNEAUX PHOTOVOLTAIQUES ET/OU EOLIENNES**
MATRIXANSCHLUSSVORRICHTUNG FÜR PV-MODULE UND/ODER WINDTURBINEN
MATRIX CONNECTION DEVICE FOR PHOTOVOLTAIC PANELS AND/OR WIND TURBINES

(30) Priorité: 04.06.2010 FR 1054419
(43) Date de publication de la demande: 10.04.2013
(73) Titulaire: AEG Power Solutions B.V., 1161 AG Zwanenburg (NL)
(72) Inventeur: DELAY, Christian, F-37260 Thilouze (FR); UHL, Nicolas, F-37510 Savonnières (FR); ESTOP, Pascal, F-37170 Chambray-lès-Tours (FR)
(74) Mandataire: David, Alain
(86) Numéro de dépôt international: PCT/FR2011/051256
(87) Numéro de publication internationale: WO 2011/151599

(56) Documents cités:
- WO-A1-2009/060273
- US-B1- 6 259 017
- BARTHELS H ET AL: "Phoebus-Julich: An autonomous energy supply system comprising photovoltaics, electrolytic hydrogen, fuel cell", INTERNATIONAL JOURNAL OF HYDROGEN ENERGY, ELSEVIER SCIENCE PUBLISHERS B.V., BARKING, GB, vol. 23, no. 4, 1 avril 1998 (1998-04-01), pages 295-301, XP004101163, ISSN: 0360-3199, DOI: DOI:10.1016/S0360-3199(97)00055-4
- DELFINO F ET AL: "An integrated active and reactive power control scheme for grid-connected photovoltaic production systems", POWER ELECTRONICS SPECIALISTS CONFERENCE, 2008. PESC 2008. IEEE, IEEE, PISCATAWAY, NJ, USA, 15 juin 2008 (2008-06-15), pages 1463-1468, XP031300175, ISBN: 978-1-4244-1667-7

## Description

### Domaine de la technique

La présente invention se rapporte au domaine des générateurs d'énergie photovoltaïque ou éolienne et elle concerne plus particulièrement un dispositif de connexion pour relier des sources d'énergie unidirectionnelles (c'est-à-dire périodiques ou continues ayant toujours la même polarité) à des convertisseurs de puissance.

### Art antérieur

Le recours à l'énergie solaire pour l'alimentation en énergie de charges diverses ou pour l'injection sur le réseau est de plus en plus généralisée. Dans les installations petites ou moyennes (typiquement inférieur à quelques centaines de watts), l'emploi d'un seul convertisseur alimenté par un unique panneau photovoltaïque ou plusieurs panneaux photovoltaïques disposés en parallèle est la plupart du temps suffisant.

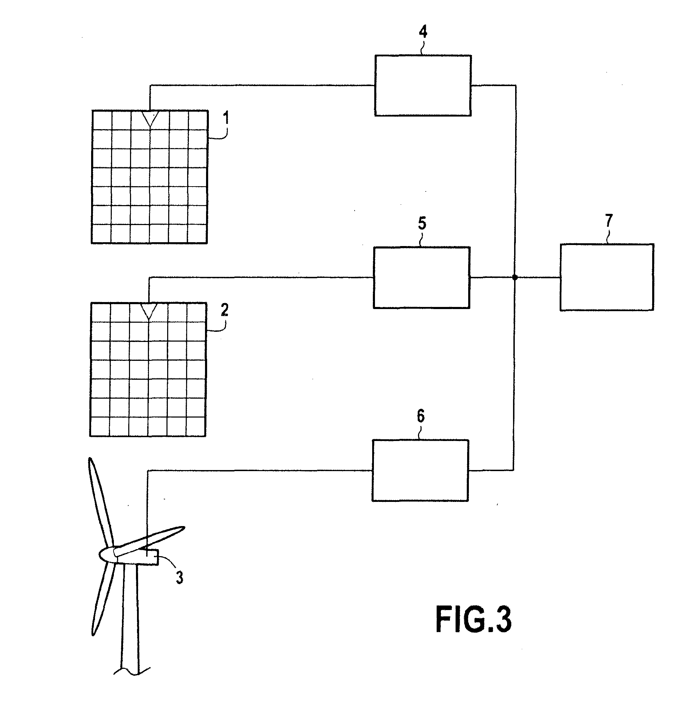

Par contre, pour les installations plus puissantes ou mixtes, c'est-à-dire comportant à la fois des panneaux photovoltaïques et des éoliennes, comme l'illustre le schéma de principe de la figure 3, les champs de panneaux photovoltaïques 1 et 2 et l'éolienne 3 sont chacun reliés à un convertisseur 4, 5, 6 relié au réseau d'alimentation ou à une charge commune 7. Cette configuration n'est toutefois pas sans poser quelques inconvénients. En effet, le rendement des convertisseurs étant fonction de la puissance consommée, celui-ci s'avère médiocre lorsque les conditions d'ensoleillement ou de vent sont faibles. De même, les convertisseurs ayant besoin d'une puissance minimale pour démarrer, leur mise en route s'avère impossible sous faible ensoleillement ou faible vent et nécessite donc l'emploi d'énergie alternative ou le recours à un stockage intermédiaire lorsque la charge doit être alimentée dans de telles conditions. Il en résulte des installations relativement complexes et alors peu économiques en terme de coût et d'encombrement.

WO2009/060273 A1 présente une procédé de fonctionnement et un dispositif de commande d'une installation énergétique comprenant des modules photovoltaïques et des onduleurs, dans lesquels un organe de sélection et de commande sélectionne des combinaisons de connexions des modules photovoltaïques et commande un organe de commutation pour établir une combinaison sélectionnée et puis sélectionner et établir un mode de connexion des modules photovoltaïques aux onduleurs.

### But et objet de l'invention

La présente invention a pour but de pallier les inconvénients précités en proposant un dispositif de connexion entre des sources d'énergie unidirectionnelles et des convertisseurs de puissance qui maximise le rendement de chaque convertisseur et en facilite le démarrage sous de faibles conditions d'ensoleillement ou de vent. Ces buts sont atteints par un dispositif de connexion matricielle disposé entre n sources d'énergie unidirectionnelles et au moins n+1 convertisseurs de puissance dans le but d'alimenter une charge commune, caractérisé en ce qu'il comprend :
- n interrupteurs matriciels comportant chacun n commutateurs de liaison dont les sorties sont reliées entres elles et dont les n entrées sont reliées aux n sorties desdites sources d'énergie unidirectionnelles, la sortie de la première source d'énergie unidirectionnelle étant reliée à chacun des premiers commutateurs de chacun des interrupteurs matriciels, la sortie de la deuxième source d'énergie unidirectionnelle étant reliée à chacun des deuxièmes commutateurs de chacun des interrupteurs matriciels et ainsi de suite jusqu'à la sortie de la nième source d'énergie unidirectionnelle qui est reliée à chacun des nièmes commutateurs de chacun des interrupteurs matriciels,
- au moins un interrupteur supplémentaire comportant n commutateurs dont les sorties sont reliées entre elles et les n entrées reliées respectivement aux n sorties desdites sources d'énergie unidirectionnelles, et
- un circuit de contrôle/commande pour commander ou non le démarrage desdits convertisseurs de puissance en fonction de la puissance disponible au niveau de chacune desdites sources d'énergie unidirectionnelles puis pour commander leur maintien en tension ou leur désactivation en fonction de la puissance consommée par chacun d'eux.

Ainsi, par cette connexion matricielle, on autorise un démarrage successif ou simultané des convertisseurs selon les conditions d'ensoleillement ou de vent affectant chacune des sources d'énergie (lesquelles peuvent être par exemple des panneaux photovoltaïques ou des éoliennes ou une combinaison des deux). Ensuite, une fois démarrés, les convertisseurs restent ou non sous tension selon l'évolution des conditions d'ensoleillement ou de vent et la puissance consommée par les convertisseurs pour alimenter la charge.

Le dispositif de connexion matricielle selon l'invention peut comporter en outre n commutateurs de court-circuit pour mettre en court-circuit la sortie de chacune desdites sources d'énergie unidirectionnelles et ainsi permettre une mesure de ladite puissance disponible ou bien encore n capteurs de puissance disposés auprès desdites n sources d'énergie unidirectionnelles pour permettre une mesure de ladite puissance disponible. Selon la nature de la source d'énergie, ledit capteur de puissance peut être formé par un capteur d'ensoleillement ou par un capteur de mesure de la vitesse du vent.

De préférence, lesdits commutateurs comportent un IGBT ou un MOSFET associé à des circuits de protection à la fois contre les surtensions et les surintensités ou encore un simple composant électromécanique.

### Brève description des dessins :

Les caractéristiques et avantages de la présente invention ressortiront mieux de la description suivante, faite à titre indicatif et non limitatif, en regard des dessins annexés sur lesquels :
- la figure 1 illustre un exemple de réalisation d'une installation solaire mettant en oeuvre un dispositif de connexion matricielle conforme à la présente invention,
- la figure 2 est un organigramme des différentes étapes permettant l'alimentation de 3 convertisseurs depuis 3 panneaux photovoltaïques, et
- la figure 3 est un exemple d'installation mixte solaire/éolien de l'art antérieur.

### Description détaillée d'un mode de réalisation préférentielle

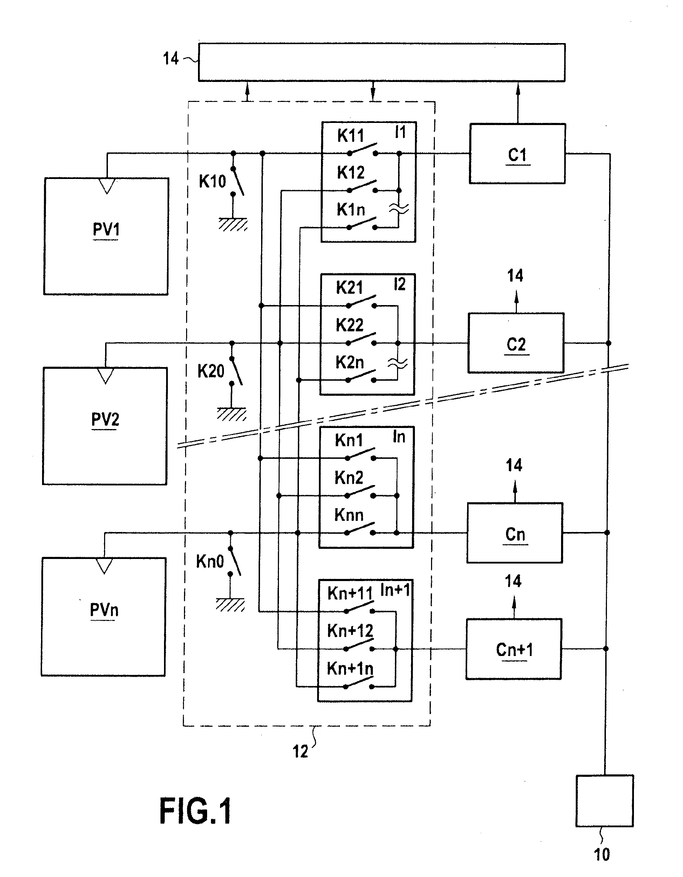

La figure 1 illustre schématiquement une installation solaire dans laquelle une pluralité de panneaux photovoltaïques PV1, PV2 à PVn est reliée à une pluralité correspondante de convertisseurs de puissance C1, C2 à Cn dans le but d'alimenter une charge (utilisation) commune 10. Selon la nature de la charge, ces convertisseurs de puissance peuvent être des convertisseurs continu/continu (DC/DC) ou continu/alternatif (DC/AC). Cette installation de conversion d'énergie avec ses n panneaux photovoltaïques est bien entendu mentionnée à titre illustratif et toute autre installation réalisée à partir d'autres types de sources d'énergie unidirectionnelles est envisageable.

Conformément à l'invention, cette liaison est effectuée au travers d'un dispositif de connexion matricielle 12 comportant n interrupteurs matriciels I1, I2 à In comportant chacun n commutateurs de liaison Ki1, Ki2 à Kin dont les sorties sont reliées entres elles et dont les n entrées sont reliées aux n sorties des panneaux photovoltaïques. Plus précisément, la sortie du premier panneau photovoltaïque PV1 est reliée à chacun des premiers commutateurs Ki1 de chacun des interrupteurs matriciels I1, 12 à In, la sortie du deuxième panneau photovoltaïque PV2 est reliée à chacun des deuxièmes commutateurs Ki2 de chacun des interrupteurs matriciels I1, I2 à In et ainsi de suite jusqu'à la sortie du nième panneau photovoltaïque PVn qui est reliée à chacun des nièmes commutateurs Kin de chacun des interrupteurs matriciels I1, I2 à In.

De plus, N commutateurs de court-circuit K10, K20 à Kn0 sont aussi prévus pour mettre en court-circuit la sortie de chacun des panneaux photovoltaïques. Les commutateurs sont commandés selon une loi de commande prédéterminée depuis un circuit de contrôle/commande 14 recevant différentes informations de ces commutateurs et des convertisseurs de puissance. Plus précisément, ce circuit de contrôle/commande recueille d'une part la valeur du courant passant dans chacun des commutateurs de court-circuit K10, K20 à Kn0 lorsque ceux-ci sont fermés et qui correspond au courant de court-circuit du panneau photovoltaïque auquel un commutateur donné est raccordé et d'autre part la valeur de courant en sortie de chacun des convertisseurs C1, C2 à Cn.

Le dispositif de connexion matricielle comporte en outre un convertisseur de puissance supplémentaire Cn+1 dont la sortie est reliée également à la charge 10 et dont l'entrée est connectée à la sortie d'un interrupteur supplémentaire In+1 comportant n commutateurs Kn+11, Kn+12 à Kn+1n dont les sorties sont reliées entre elles et les n entrées reliées respectivement aux n sorties des panneaux photovoltaïques.

De préférence, chacun des commutateurs est réalisé à partir d'un composant électronique intégrant un IGBT ou un MOSFET et comporte, comme il est connu, des circuits de protection à la fois contre les surtensions et les surintensités. Toutefois, une réalisation à partir de composants électromécaniques (relais, etc...) est tout aussi envisageable.

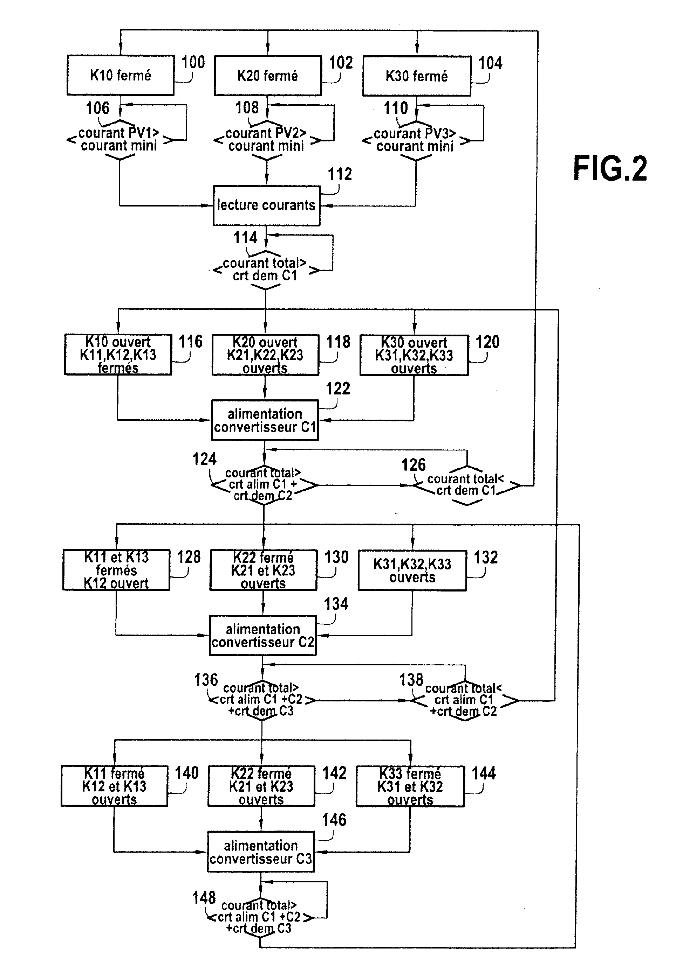

Le fonctionnement du dispositif de connexion matricielle selon l'invention est maintenant explicité en référence à la figure 2 qui représente un organigramme de commande de trois convertisseurs alimentés à partir de trois panneaux photovoltaïques. Bien entendu, le procédé décrit ci-après est applicable à n panneaux photovoltaïques. De même, il est généralisable à toutes sources d'énergie unidirectionnelles et notamment à des éoliennes, sous réserve de disposer au niveau de ces autres sources d'un courant de court-circuit proportionnel à la puissance disponible.

On supposera l'état initial correspondant à une absence d'ensoleillement (par exemple la nuit). Dans cet état, les commutateurs de court-circuit K10 (étape 100), K20 (étape 102) à K30 (étape 104) sont fermés (les convertisseurs C1, C2 et C3 sont arrêtés) et le restent tant que la valeur du courant traversant ces commutateurs qui est proportionnelle à la puissance disponible du panneau photovoltaïque n'est pas supérieure à une valeur déterminée minimale prédéfinie correspondant à sa puissance minimale de fonctionnement (tests des étapes 106, 108, 110). Lorsque l'une ou plusieurs des valeurs recueillies sont supérieures à cette valeur prédéfinie, elle est ou elles sont transmises au circuit 14 (étape 112) et lorsque la valeur totale des courants excède le courant minimal nécessaire au démarrage du premier convertisseur C1 (test de l'étape 114), alors les commutateurs de court-circuit K10, K20 et K30 sont ouverts et les trois commutateurs K11, K12 et K13 du premier interrupteur de liaison I1 sont fermés (étape 116), les trois autres commutateurs K2i et K3i (i = 1 à n) des deux autres interrupteurs I2 et 13 restant ouverts (étapes 118 et 120), permettant l'alimentation du premier convertisseur C1 (étape 122) directement à partir des trois panneaux photovoltaïques ainsi connectés en parallèle.

Ainsi, au contraire de l'art antérieur, il n'est plus nécessaire pour démarrer un premier convertisseur d'attendre que le panneau photovoltaïque auquel il est relié produise à lui seul la puissance disponible nécessaire à ce démarrage, il suffit d'obtenir celle-ci par la mise en parallèle d'un nombre suffisant de panneaux photovoltaïque sous réserve que la puissance émise par chacun des panneaux retenus soit supérieure à sa puissance minimale de fonctionnement propre. Dès lors, un ensoleillement même faible suffit au démarrage d'au moins un convertisseur de l'installation solaire.

Tant que la puissance disponible n'est pas suffisante pour démarrer le deuxième convertisseur (réponse non au test de étape 124) et sous réserve qu'elle ne retombe pas sous sa puissance minimale de démarrage (étape 126) auquel cas le premier convertisseur C1 serait arrêté et les commutateurs de court-circuit refermés, ce premier convertisseur C1 reste seul actif. Lorsque la puissance disponible s'avère suffisante pour démarrer le deuxième convertisseur (réponse oui au test de l'étape 124), le commutateur K12 du premier interrupteur I1 est ouvert (étape 128) et en parallèle le commutateur K22 du deuxième interrupteur I2 est fermé (étape 130) permettant l'alimentation du deuxième convertisseur C2 (étape 134), les trois commutateurs K3i (i = 1 à n) du troisième interrupteur I3 restant comme précédemment ouverts (étape 132).

Tant que la puissance disponible n'est pas suffisante pour démarrer le troisième convertisseur (réponse non au test de étape 136) et sous réserve qu'elle ne retombe pas sous sa puissance minimale de démarrage (étape 138) auquel cas le deuxième convertisseur C2 serait arrêté et les commutateurs K12 et K22 refermé et ré-ouvert respectivement, ce deuxième convertisseur C2 reste actif. Lorsque la puissance disponible s'avère suffisante pour démarrer le troisième convertisseur (réponse oui au test de l'étape 136), le commutateur K13 du premier interrupteur I1 est ouvert (étape 140) et en parallèle le commutateur K33 du troisième interrupteur I3 est fermé (étape 144) permettant l'alimentation du troisième convertisseur C3 (étape 146), le commutateur K22 du deuxième interrupteur I2 restant comme précédemment fermé (étape 142). Les trois convertisseurs resteront ainsi en fonctionnement tant que la puissance disponible de ce troisième convertisseur restera supérieure à sa puissance de démarrage (test de l'étape 148). A défaut, celui-ci sera arrêté et les commutateurs K13 et K33 refermé et ré-ouvert respectivement pour retourner à un fonctionnement avec les seuls deux convertisseurs C1 et C2. En pratique, le circuit de contrôle/commande 14 assure une optimisation du rendement des convertisseurs en décidant ou non de fermer les différents commutateurs de façon à aiguiller l'énergie issue des panneaux photovoltaïques sur le nombre de convertisseurs adéquat. La puissance des convertisseurs est calculée simplement à partir du produit de leur courant de sortie par la tension de sortie commune aux bornes de la charge 10.

On notera que la présence d'un convertisseur de puissance supplémentaire Cn+1 dont la sortie est reliée à la charge 10 et dont l'entrée est connectée à la sortie de l'interrupteur supplémentaire In+1 au niveau du dispositif de connexion matricielle selon l'invention permet avantageusement de remplacer un convertisseur défaillant et ainsi de continuer à exploiter la totalité de la puissance délivrée par les panneaux photovoltaïques. Bien entendu, le recours à plusieurs convertisseurs supplémentaires et non un seul est aussi envisageable, notamment en cas de forte puissance nécessitant l'utilisation de nombreux convertisseurs.

On pourra noter également que lorsque que le nombre n est élevé, selon l'ensoleillement respectif des panneaux photovoltaïques, il n'est pas nécessaire d'ouvrir les commutateurs K1i (i = 1 à n) des panneaux photovoltaïques dont la puissance minimale de fonctionnement n'est pas atteinte et la mise en parallèle des panneaux photovoltaïques peut alors concerner un nombre inférieur à n.

Enfin, on notera que, si dans la description précédente, la puissance disponible pour le démarrage des convertisseurs a été déterminée à partir de la valeur des courants de court-circuit relevée dans les commutateurs de court-circuit en sortie des panneaux photovoltaïques, il est aussi possible de la déterminer depuis une mesure d'ensoleillement obtenue à partir de simples capteurs d'ensoleillement disposés auprès de ces panneaux. Dans le cas d'utilisation d'autres types de sources d'énergie unidirectionnelles, comme des éoliennes, lorsqu'une valeur de courant de court-circuit n'est pas accessible, un capteur de mesure de la vitesse du vent peut alors être employé pour déterminer cette puissance disponible.

## Revendications

1. Dispositif de connexion matricielle disposé entre n sources d'énergie unidirectionnelles (PV1, PV2, PVn) et au moins n+1 convertisseurs de puissance (C1, C2, Cn, Cn+1) dans le but d'alimenter une charge commune (10), **caractérisé en ce qu'**il comprend :
. n interrupteurs matriciels (I1, I2 à In) comportant chacun n commutateurs de liaison (Ki1, Ki2 à Kin) dont les sorties sont reliées entres elles et dont les n entrées sont reliées aux n sorties desdites sources d'énergie unidirectionnelles, la sortie de la première source d'énergie unidirectionnelle (PV1) étant reliée à chacun des premiers commutateurs (Ki1) de chacun des interrupteurs matriciels (I1, I2 à In), la sortie de la deuxième source d'énergie unidirectionnelle (PV2) étant reliée à chacun des deuxièmes commutateurs Ki2 de chacun des interrupteurs matriciels (I1, I2 à In) et ainsi de suite jusqu'à la sortie de la nième source d'énergie unidirectionnelle (PVn) qui est reliée à chacun des nièmes commutateurs (Kin) de chacun des interrupteurs matriciels (I1, I2 à In),
. au moins un interrupteur supplémentaire (In+1) comportant n commutateurs (Kₙ₊₁1, Kₙ₊₁2 à Kₙ₊₁n) dont les sorties sont reliées entre elles et les n entrées reliées respectivement aux n sorties desdites sources d'énergie unidirectionnelles, et
. un circuit de contrôle/commande (14) pour commander ou non le démarrage desdits convertisseurs de puissance en fonction de la puissance disponible au niveau de chacune desdites sources d'énergie unidirectionnelles puis pour commander leur maintien en tension ou leur désactivation en fonction de la puissance consommée par chacun d'eux.

2. Dispositif de connexion matricielle selon la revendication 1, **caractérisé en ce qu'**il comporte en outre n capteurs de puissance disposés auprès desdites n sources d'énergie unidirectionnelles pour permettre une mesure de ladite puissance disponible.

3. Dispositif de connexion matricielle selon la revendication 2, **caractérisé en ce que** ledit capteur de puissance est formé par un capteur d'ensoleillement ou par un capteur de mesure de la vitesse du vent.

4. Dispositif de connexion matricielle selon la revendication 1, **caractérisé en ce qu'**il comporte en outre n commutateurs de court-circuit (K10, K20 à Kn0) pour mettre en court-circuit la sortie de chacune desdits sources d'énergie unidirectionnelles et ainsi permettre une mesure de ladite puissance disponible.

5. Dispositif de connexion matricielle selon l'une quelconque des revendications précédentes, **caractérisé en ce que** lesdits commutateurs comportent un IGBT ou un MOSFET associé à des circuits de protection à la fois contre les surtensions et les surintensités.

6. Dispositif de connexion matricielle selon l'une quelconque des revendications précédentes, **caractérisé en ce que** lesdits commutateurs comportent un composant électromécanique.

7. Dispositif de connexion matricielle selon l'une quelconque des revendications précédentes, **caractérisé en ce que** lesdites sources d'énergie unidirectionnelles sont des panneaux photovoltaïques ou des éoliennes ou une combinaison des deux.

8. Installation de conversion d'énergie comportant un dispositif de connexion matricielle selon l'une quelconque des revendications 1 à 7 pour alimenter des convertisseurs de puissance à partir de sources d'énergie unidirectionnelles.

## Patentansprüche

1. Matrixanschlussvorrichtung, die zwischen n Einweg-Energiequellen (PV1, PV2, PVn) und wenigstens n+1 Leistungswandlern (C1, C2, Cn, Cn+1) angeordnet ist, mit dem Ziel, eine gemeinsame Last (10) zu versorgen, **dadurch gekennzeichnet, dass** sie umfasst:
• n Matrixschalter (11, 12 bis In), die jeweils n Verbindungsschalter (Ki1, Ki2 bis Kin) umfassen, deren Ausgänge untereinander verbunden sind und deren n Eingänge mit den n Ausgängen der Einweg-Energiequellen verbunden sind, wobei der Ausgang der ersten Einweg-Energiequelle (PV1) mit jedem der ersten Schalter (Ki1) eines jeden der Matrixschalter (I1, 12 bis In) verbunden ist, wobei der Ausgang der zweiten Einweg-Energiequelle (PV2) mit jedem der zweiten Schalter (Ki2) eines jeden der Matrixschalter (11, I2 bis In) verbunden ist, und so weiter bis zu dem Ausgang der n-ten Einweg-Energiequelle (PVn), der mit jedem der n-ten Schalter (Kin) eines jeden der Matrixschalter (I1, I2 bis In) verbunden ist,
• wenigstens einen zusätzlichen Schalter (In+1), der n Schalter (Kₙ₊₁1, Kₙ₊₁2 bis Kₙ₊₁n) umfasst, deren Ausgänge untereinander verbunden sind und deren n Eingänge jeweils mit den n Ausgängen der Einweg-Energiequellen verbunden sind, sowie
• einen Kontroll-/Steuerkreis (14), um das Starten der Leistungswandler in Abhängigkeit von der im Bereich einer jeden der Einweg-Energiequellen verfügbaren Leistung zu steuern oder nicht, anschließend um deren Halten unter Spannung oder deren Deaktivierung in Abhängigkeit von der durch jeden von ihnen verbrauchten Leistung zu steuern.

2. Matrixanschlussvorrichtung nach Anspruch 1, **dadurch gekennzeichnet, dass** sie ferner n Leistungssensoren umfasst, die bei den n Einweg-Energiequellen angeordnet sind, um eine Messung der verfügbaren Leistung zu ermöglichen.

3. Matrixanschlussvorrichtung nach Anspruch 2, **dadurch gekennzeichnet, dass** der Leistungssensor durch einen Sonneneinstrahlungssensor oder durch einen Sensor zur Messung der Windgeschwindigkeit gebildet ist.

4. Matrixanschlussvorrichtung nach Anspruch 1, **dadurch gekennzeichnet, dass** sie ferner n Kurzschlussschalter (K10, K20 bis Kn0) umfasst, um den Ausgang einer jeden der Einweg-Energiequellen kurzzuschließen und somit eine Messung der verfügbaren Leistung zu ermöglichen.

5. Matrixanschlussvorrichtung nach einem der vorhergehenden Ansprüche, **dadurch gekennzeichnet, dass** die Schalter einen IGBT oder einen MOSFET umfassen, der Schaltungen zum Schutz vor Überspannungen und zugleich vor Überströmen zugeordnet ist.

6. Matrixanschlussvorrichtung nach einem der vorhergehenden Ansprüche, **dadurch gekennzeichnet, dass** die Schalter ein elektromechanisches Bauelement umfassen.

7. Matrixanschlussvorrichtung nach einem der vorhergehenden Ansprüche, **dadurch gekennzeichnet, dass** die Einweg-Energiequellen Photovoltaik-Paneele oder Windkraftanlagen oder eine Kombination aus beiden sind.

8. Energieumwandlungsanlage, die eine Matrixanschlussvorrichtung nach einem der Ansprüche 1 bis 7 umfasst, um Leistungswandler mittels Einweg-Energiequellen zu versorgen.

## Claims

1. A matrix connection device disposed between n unidirectional energy sources (PV1, PV2, PVn) and at least n+1 power converters (C1, C2, Cn, Cn+1) for the purpose of powering a common load (10), said device being **characterized in that** it comprises:
· n matrix switch units (I1, 12 to In), each of which comprises n link switches (Ki1, Ki2 to Kin) having their outlets connected together and having their n inlets connected to the n outlets of said unidirectional energy sources, the outlet of the first unidirectional energy source (PV1) being connected to each of the first switches (Ki1) of each of the matrix switch units (I1, 12 to In), the outlet of the second unidirectional energy source (PV2) being connected to each of the second switches (Ki2) of each of the matrix switch units (I1, 12 to In) and so on to the outlet of the n^{th} unidirectional energy source (PVn) that is connected to each of the n^{th} switches (Kin) of each of the matrix switch units (I1, 12 to In);
· at least one additional switch unit (In+1) comprising n switches (Kₙ₊₁1, Kₙ₊₁2 to Kₙ₊₁n) having their outlets connected together and their n inlets connected to respective ones of the n outlets of said unidirectional energy sources; and
· a monitoring and control circuit (14) for starting up or not starting up said power converters as a function of the power available at each of said unidirectional energy sources, and then for keeping them switched on or for deactivating them as a function of the power consumed by each of them.

2. A matrix connection device according to claim 1, **characterized in that** it further comprises n power sensors disposed in association with said n unidirectional energy sources so as to enable said available power to be measured.

3. A matrix connection device according to claim 2, **characterized in that** said power sensor is formed by an insolation sensor or by a sensor for measuring the speed of the wind.

4. A matrix connection device according to claim 1, **characterized in that** it further comprises n short-circuit switches (K10, K20 to Kn0) for short-circuiting the outlet of each of said unidirectional energy sources, thereby enabling said available power to be measured.

5. A matrix connection device according to any preceding claim, **characterized in that** each of said switches comprises an IGBT or a MOSFET associated with protection circuits for protecting both against voltage surges and against current surges.

6. A matrix connection device according to any preceding claim, **characterized in that** each of said switches comprises an electromechanical component.

7. A matrix connection device according to any preceding claim, **characterized in that** said unidirectional energy sources are photovoltaic panels or wind turbines or a combination of both.

8. An energy conversion installation including a matrix connection device according to any one of claims 1 to 7 for powering power converters from unidirectional energy sources.
